(19) Europäisches Patentamt
European Patent Office
Office européen des brevets

(11) **EP 0 917 347 A2**

(12) **EUROPEAN PATENT APPLICATION**

(43) Date of publication:
19.05.1999 Bulletin 1999/20

(51) Int. Cl.$^6$: **H04N 1/40**

(21) Application number: 98120843.2

(22) Date of filing: 03.11.1998

(84) Designated Contracting States:
AT BE CH CY DE DK ES FI FR GB GR IE IT LI LU
MC NL PT SE
Designated Extension States:
AL LT LV MK RO SI

(30) Priority: 17.11.1997 US 971767

(71) Applicant: Xerox Corporation
Rochester, New York 14644 (US)

(72) Inventor: Curry, Donald J.
Menlo Park, CA 94025 (US)

(74) Representative:
Grünecker, Kinkeldey,
Stockmair & Schwanhäusser
Anwaltssozietät
Maximilianstrasse 58
80538 München (DE)

(54) **Dynamically adjustable unsharp masking for digital image processing**

(57) A dynamically adjustable unsharp masking process for perceptually altering image edges of digitally rendered images depending on distinguishable characteristics of said images, said process comprising: generating a digitally represented blurred representation of a digitally represented original image; comparing the digital representation of said original image with the digitally representation of said blurred version of said original image to define a digital unsharp mask for said image; multiplying said unsharp mask by an adjustable weighting factor, said weighting factor being dynamically adjusted depending on said characteristics of said images for blurring edges in some image regions and emphasizing edges in other image regions; and combining said weighted unsharp mask with said original image to render an unsharped masked version of said original image.

FIG. 1

EP 0 917 347 A2

## Description

This invention relates to digital image processing and, more particularly, to a dynamically adjustable image sharpening and blurring technique.

Unsharp masking is used in photography for highlighting edges of images. To this end, a blurred version of an image is subtracted from the original image to produce an unsharp image model. This mask is then superimposed on the original image to increase the contrast of any abrupt contrast transitions (i.e., edges) within the image. This process can be described by a linear equation:

$$I_{out} = I_{in} + C (I_{in} - I_{mask})$$

where

I_in = the original image

I_mask = the blurred image

C = a sharpening/blurring control variable

I_out = the edge sharpened image

Digital images are composed of discrete tones (e.g., often only black and white pixels), so the perceived quality of these images strongly depends on the human visual response to the printed pixel patterns that define the images. Thus, continuous tone images are most effectively represented by pixel patterns, such as halftoned pixel patterns which are optimized to create the appearance of smooth, well controlled contrast variations, while line art images, such as text, are better represented by pixel patterns which are optimized to create the appearance of sharp, crisp contrast variations. Therefore, it would be beneficial to be able to dynamically tune a digital unsharp image mask to the type of digital image that is being printed so that edge highlighting of the unsharp mask can be realized without detracting from the perceived quality of digitally printed image as a whole.

Sometimes perceived image quality is secondary to the goal of printing the fundamental information contrast of the image at the lowest possible cost. Some printers have a "draft" printing mode for this purpose. The fundamental information contrast of many images is represented by the edges of the compositional elements of these images. Consequently, it would be beneficial to have a technique for generating effectively "differentiated" versions of digital images so that marking material (e.g., toner or ink) can be saved when printing these images in a "draft" mode.

Fig. 1 is a block diagram of a digital image processing system with tunable unsharp masking in accordance with this invention;

Fig. 2 is a block diagram of a representative stage of a separable filter of the type that can be used to reduce the computational complexity of carrying out this invention; and

Fig. 3 is a tone reproduction curve for a toner saver mode of operation.

While the invention is described in some detail herein with reference to a specific embodiment, it is to be understood that there is no intent to limit it to that embodiment. On the contrary, the intent is to cover all modifications, alternatives and equivalents falling within the spirit and scope of the invention as defined by the appended claims.

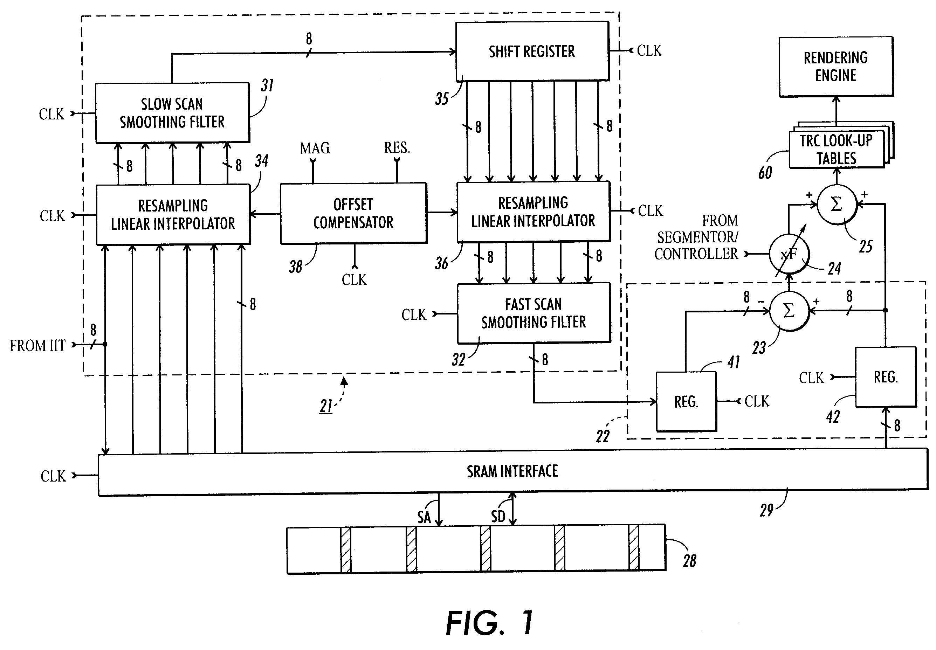

Turning now to the drawings, and at this point especially to Fig. 1, an original image is represented at a suitable resolution, such as 300 dots per inch (d.p.i.) by pixel values (typically 8-bit values) which are serially received in raster scan order (say, left-to-right/top-to-bottom order) from a suitable image input terminal (IIT). As a general rule, the IIT is a scanner subsystem.

To carry out the unsharp masking of the digital images that is contemplated by this invention, there is an image resampling, contextually sensitive smoothing filter 21 for feeding a blurred version of the original image to an unsharp mask generator 22.

In the unsharp mask generator 22, a summer 23 computes the difference between the original image and the blurred version of the image to provide an unsharp mask of the original image. A variable multiplier 24 then weights this unsharp mask in accordance with an adjustable weighting factor F. Finally, a summer 25 then additively combines this weighted unsharp mask with the original image for rendering of the unsharp masked image at the selected magnification and resolution by a suitable rendering engine 26.

As illustrated, an SRAM memory 28 functions as a randomly addressable FIFO ring buffer for sharing the pixel values which are needed to compute the blurred and unsharp masked versions of the original image. In one application, it has been found that only about five scan lines of context are required to satisfactorily compute the blurred image, so the SRAM 28 is sized accordingly. Data is transferred back and forth between the SRAM 28 and an SRAM interface 29 via a data path SD, and the locations within which these data reads and writes are performed are determined by the addresses carried on an address path SA.

To reduce the computational complexity, the smoothing filter 21 is a so-called separable filter having two sections, 31 and 32, one for contextually smoothing the image in the slowscan direction (i.e., the process direction) and the other for contextually smoothing the image in the orthogonal or fast scan direction. Thus, as shown, the original input image first is resampled by a linear interpolator 34 and then is smoothed in the slow scan direction by the first section 31 of the filter 21. This provides an intermediate representation of the image, so sufficient context of this intermediate representation to carry out the smoothing of the image in the fast scan direction is stored in a shift register 35 which has an output post from each of its stages. Thus, the fast scan context that is accumulated by the shift register 35 is resampled by another linear interpolator 36 and then smoothed in the fast scan direction by the second stage 32 of the smoothing filter 21.

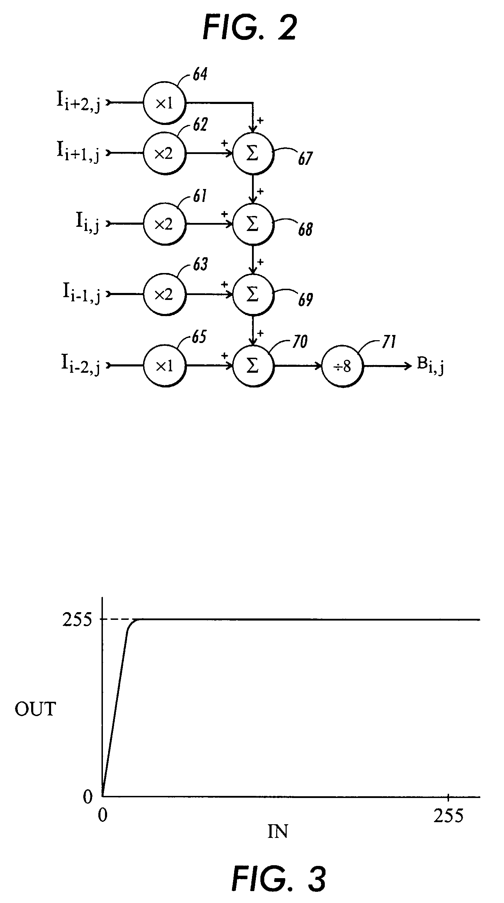

Typically, each section of the filter 21 comprises, as shown in Fig. 2, multipiers 61-65 for multiplying the current pixel value and its nearest vertical or horizontal neighbors by weights of 2,2,2,1 and 1, respectively, (or 1,2,2,2,1 as viewed with the filter centered on the current pixel). These weighted pixel values then are summed by summer 67-70. Finally, the aggregate of the sums is divided by the sum of the weights in a divider 71. As is known, multiplying and dividing powers of 2 corresponds to shifts in one direction or the other when implemented in hardware. As will be appreciated, the original image is effectively stepped across the smoothing filter 21 in context and at a desired magnification and resolution. The magnification may cause the image to step across the smoothing filter 21 in steps that are not integer multiples of the original scan pitch, so an offset compensator 38. is provided for causing the resampling linear interpolators 34 and 36 to substantially compensate for any displacement of the pixel center positions in the magnified image from the center positions of the corresponding pixels in the original image. One additional line of context usually is sufficient to enable the interpolator 34 to perform this compensation in the slow scan direction. In the slow scan direction, however, the interpolator 36 may not only have to compensate for magnification caused pixel center offsets, but may also have to compensate for resolution mismatches (such as when an image that is scanned at 300 d.p.i., is rendered at 600 d.p.i.).

An image processing pipeline is employed to carry out this invention, so that data is synchronously transferred from step-to-step of the process. The registers 41 and 42 through which the blurred and the original image are respectively shifted for computing the unsharp mask and the unsharp masked output image are part of this pipeline.

In accordance with the present invention, the weighting factor F for the unsharp mask is adjustable by varying the multiplication of the multiplier 24. This weighting may be dynamically adjusted on, say, a pixel-by-pixel basis in response to, say, a logical image type characterizing signal supplied by an image segmentor (not shown). Alternatively, the weighting factor F of the multiplier 24 may be controlled in response to the manual manipulation of a mode switch (also not shown). Or, the dynamic and manual control of the weighting factor F may be combined. The unsharp mask tends to soften or sharpen the rendered image depending on whether the weighting factor F is negative or positive, respectively. Thus, for example, the weighting factor F may be selected to be about (a) -1.0 for suppressing and/or softening halftoned representations of continuous tone images, (b) 1.2 for the printing of line art images to enhance the image edges, or (c) 2.0 or higher for draft mode printing to cause the edge sharpening to strongly dominate the rendering in the interest of saving marking material. If the weighting factor F is only manually controllable, it may be set to a value of about 1.0 for a normal print mode and to a value of about 2.0 for a draft or toner/ink saver mode. As shown, the output pixel values are adjusted to provide the desired tranform function for each selected mode of operation of the rendering engines by a mode dependent look-up table 60. For example, as illustrated in Fig. 3, there is an extreme example of a so-called tone reproduction curve that is characteristic of the toner saver mode of operation.

## Claims

1. A dynamically adjustable unsharp masking process for perceptually altering image edges of digitally rendered images depending on distinguishable characteristics of said images, said process comprising:

    generating a digitally represented blurred representation of a digitally represented original image;

    comparing the digital representation of said original image with the digitally representation of said blurred version of said original image to define a digital unsharp mask for said image;

    multiplying said unsharp mask by an adjustable weighting factor, said weighting factor being dynamically adjusted depending on said characteristics of said images for blurring edges in some image regions and emphasizing edges in other image regions; and

    combining said weighted unsharp mask with said original image to render an unsharped masked version of said original image.

**FIG. 1**

EP 0 917 347 A2

## FIG. 2

## FIG. 3